# EUROPEAN PATENT APPLICATION

(11) **EP 4 753 043 A1**
(43) Date of publication of application: **03.06.2026**
(21) Application number: 24844205.5
(22) Date of filing: 19.02.2024
(51) Int. Cl.: H01M 50/244

(54) **BATTERY TRAY, BATTERY PACK AND VEHICLE**

(30) Priority: 26.07.2023 CN 202321991512 U
(71) Applicant: BYD Company Limited, Shenzhen, Guangdong 518118 (CN)
(72) Inventor: ZHU, Liequn, Shenzhen, Guangdong 518118 (CN); HU, Shichao, Shenzhen, Guangdong 518118 (CN); ZHANG, Yaosheng, Shenzhen, Guangdong 518118 (CN); WANG, Huanhuan, Shenzhen, Guangdong 518118 (CN); LAI, Qing, Shenzhen, Guangdong 518118 (CN)
(74) Representative: Mathys & Squire
(86) International application number: PCT/CN2024/077537
(87) International publication number: WO 2025/020506

(57) **Abstract**

A vehicle, comprising a battery tray and a battery pack. The battery tray comprises: a frame, which defines a space inside the battery tray; and a tray cross beam and a tray longitudinal beam, which are arranged inside the battery tray, wherein the tray cross beam is provided with a first snap-fit opening, the tray longitudinal beam is provided with a second snap-fit opening, and the first snap-fit opening in the tray cross beam is snap-fitted with the second snap-fit opening in the tray longitudinal beam, so as to divide the space inside the battery tray into a plurality of battery accommodating spaces.

## Description

### CROSS-REFERENCE TO RELATED APPLICATION

This application claims priority to Chinese Patent Application No. 202321991512.X, filed on July 26, 2023 and entitled "BATTERY TRAY, BATTERY PACK AND VEHICLE", which is incorporated herein by reference in its entirety.

### TECHNICAL FIELD

This application relates to the field of vehicle technologies, and more specifically, to a battery tray, a battery pack, and a vehicle.

### BACKGROUND

A tray cross beam and a tray longitudinal beam of a battery tray intersect with each other, to divide the battery tray into a plurality of battery accommodating spaces. In conventional technologies, the cross beam of a battery tray or the longitudinal beam of the battery tray needs to be cut off and then rejoined together, resulting in reduced structural strength.

### SUMMARY

One objective of this application is to provide a new technical solution for a battery tray, a battery pack, and a vehicle.

To achieve the foregoing objective, in one aspect, an embodiment of this application provides a battery tray, including a frame, which defines a space inside the battery tray; and a tray cross beam and a tray longitudinal beam arranged inside the battery tray. The tray cross beam is provided with a first bayonet, the tray longitudinal beam is provided with a second bayonet, and the first bayonet of the tray cross beam is engaged with the second bayonet of the tray longitudinal beam, to divide the space inside the battery tray into a plurality of battery accommodating spaces.

The frame includes a tray longitudinal side beam, the tray cross beam is provided with a first exhaust cavity, the tray longitudinal side beam is provided with a second exhaust cavity, the first exhaust cavity communicates with the second exhaust cavity, the battery accommodating space inside the battery tray communicates with the first exhaust cavity, and the second exhaust cavity communicates with a space outside the battery tray.

Optionally, the first exhaust cavity includes a first cavity, a second cavity, and a third cavity. The first cavity communicates with the third cavity through the second cavity. A width of the second cavity is less than a width of the first cavity, the width of the second cavity is also less than a width of the third cavity, and the first cavity communicates with the battery accommodating space.

Optionally, the tray cross beam includes a first tray cross beam and a second tray cross beam. A first interval space is provided between a first cavity of the first tray cross beam and the tray longitudinal beam, and a second interval space is provided between a first cavity of the second tray cross beam and the tray longitudinal side beam.

Optionally, the first cavity of the first tray cross beam extends to the tray longitudinal side beam, and the first cavity of the second tray cross beam extends to the tray longitudinal beam.

Optionally, the tray longitudinal side beam has a first exhaust hole, and the battery accommodating space inside the battery tray communicates with the second exhaust cavity through the first exhaust hole.

Optionally, a distance between the first exhaust hole and a position at which the first exhaust cavity communicates with the second exhaust cavity is less than a first threshold.

Optionally, the first exhaust cavity is in communication below the first bayonet.

Optionally, the tray cross beam is connected to the tray longitudinal beam by welding at an engagement position between the first bayonet and the second bayonet.

Optionally, the frame further includes a tray cross side beam, the tray cross side beam is provided with an exhaust channel, and the second exhaust cavity communicates with the space outside the battery tray through the exhaust channel.

Optionally, the tray cross side beam is further provided with a second exhaust hole, and the exhaust channel communicates with the battery accommodating space of the battery tray through the second exhaust hole.

In another aspect, an embodiment of this application provides a battery pack, including a battery and the battery tray as described above. The battery is accommodated in a battery accommodating space of the battery tray.

In yet another aspect, an embodiment of this application provides a vehicle, and the vehicle is installed with the foregoing battery pack.

Beneficial effects of embodiments of this application are as follows: A cross beam of a battery tray is engaged with a longitudinal beam of the battery tray without requiring any cutting off, ensuring high structural strength.

According to the following detailed description of example embodiments of this application with reference to the accompanying drawings, other features and advantages of this application become clear.

### BRIEF DESCRIPTION OF DRAWINGS

The accompanying drawings, which are incorporated in and form a part of the specification, illustrate embodiments of this application and together with the description thereof, serve to explain the principles of this application.
FIG. 1 is a main view of a tray longitudinal beam according to an embodiment of this application;
FIG. 2 is a main view of a first tray cross beam according to an embodiment of this application;
FIG. 3 is a main view of a second tray cross beam according to an embodiment of this application;
FIG. 4 is a side view of a first tray cross beam according to an embodiment of this application; and
FIG. 5 is a three-dimensional diagram of a battery tray according to an embodiment of this application.

### Reference numerals:

1: tray longitudinal beam; 101: second bayonet; 2: first tray cross beam; 201: first bayonet; 202: third exhaust hole; 203: first cavity; 204: second cavity; 205: third cavity; 206: first interval space; 207: first exhaust cavity; 3: second tray cross beam; 301: first bayonet; 302: third exhaust hole; 303: first cavity; 304: second cavity; 305: third cavity; 306: second interval space; 4: tray longitudinal side beam; 401: first exhaust hole; 402: second exhaust cavity; 5: tray cross side beam; 501: exhaust channel; 502: second exhaust hole; 6: battery accommodating space.

### DESCRIPTION OF EMBODIMENTS

Various example embodiments of this application are described in detail with reference to the accompanying drawings. It will be noted that the relative arrangement of components and steps, numerical expressions and values set forth in these embodiments do not limit the scope of this application, unless specifically noted otherwise.

The following description of at least one example embodiment is merely illustrative in nature and is not intended to limit this application, usage or application thereof.

Technologies, methods, and devices are known to a person of ordinary skill in the relevant art may not be discussed in detail. In proper cases, the technologies, methods, and devices shall be considered as a part of the specification.

In all examples shown and discussed herein, any specific value shall be interpreted as merely an example and not as limiting. Therefore, another example of the example embodiment may have a different value.

It will be noted that similar reference numerals and letters in the following accompanying drawings indicate similar items. Therefore, once an item is defined in an accompanying drawing, the item does not need to be further discussed in the following accompanying drawings.

In the following description, a "longitudinal" direction represents a direction from a front wheel to a rear wheel of a vehicle, and a "lateral" direction represents a direction from a left wheel to a right wheel on a same axle of the vehicle.

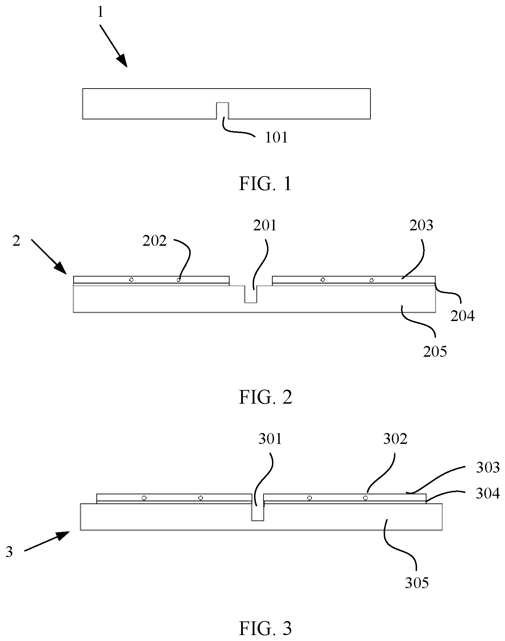

Referring to FIG. 1 to FIG. 5, a battery tray 100 includes a frame, and the frame defines a space inside the battery tray 100. In other words, the frame serves as a boundary between the inside and the outside of the battery tray 100. In this embodiment, the frame includes a pair of tray longitudinal side beams 4 and tray cross side beams 5. A rectangular space enclosed by connecting the tray longitudinal side beams 4 and the tray cross side beams 5 is the inside of the battery tray 100. The frame may further include more side beams, to form a shape such as a pentagon or a hexagon through enclosure. This is not specifically limited in this embodiment. The battery tray 100 further includes a tray cross beam and a tray longitudinal beam 1. Both the tray cross beam and the tray longitudinal beam 1 are arranged inside the battery tray 100. In this embodiment, there are two tray cross beams: a first tray cross beam 2 and a second tray cross beam 3. However, in actual production, the number of tray cross beams and tray longitudinal beams may be increased or decreased as required. A connection between the first tray cross beam 2 and the tray longitudinal beam 1 is used as an example. The first tray cross beam 2 is provided with a first bayonet 201, and the tray longitudinal beam 1 is provided with a second bayonet 101. The first bayonet 201 of the first tray cross beam 2 is engaged with the second bayonet 101 of the tray longitudinal beam 1, forming a cross-shaped connection between the first tray cross beam 2 and the tray longitudinal beam 1, thereby dividing the space inside the battery tray 100 into a plurality of battery accommodating spaces 6. In this way, there is no need to cut off the first tray cross beam 2 or the tray longitudinal beam 1, and therefore structural strength of the battery tray is improved. Similarly, a first bayonet 301 of the second tray cross beam 3 is engaged with another second bayonet 101 of the tray longitudinal beam 1, and there is also no need to cut off the second tray cross beam 3 or the tray longitudinal beam 1. After the first tray cross beam 2 and the second tray cross beam 3 are engaged with the tray longitudinal beam 1, the plurality of battery accommodating spaces 6 are divided on both sides of the tray longitudinal beam 1.

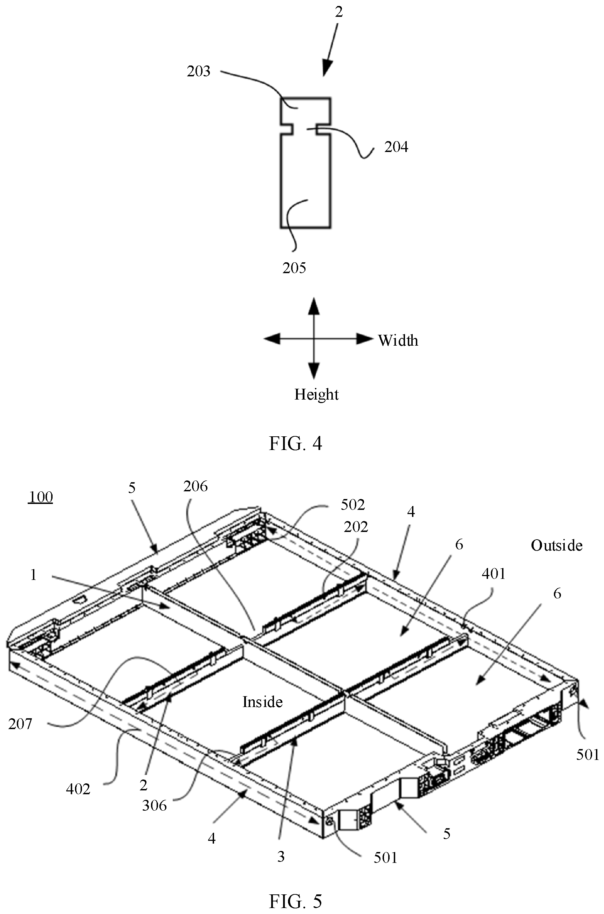

Optionally, referring to FIG. 5, the first tray cross beam 2 has a first exhaust cavity 207 and a third exhaust hole 202. The tray longitudinal side beam 4 has a second exhaust cavity 402. The first exhaust cavity 207 of the first tray cross beam 2 communicates with the second exhaust cavity 402 of the tray longitudinal side beam 4, and the third exhaust hole 202 of the first tray cross beam 2 faces the battery accommodating space 6, so that the battery accommodating space 6 inside the battery tray 100 communicates with the first exhaust cavity 207. The second exhaust cavity 402 communicates with a space outside the battery tray 100. The foregoing communication manner may be implemented by using an exhaust hole, or may be implemented in another suitable manner, for example, a manner in which an exhaust cavity is partially opened. An exhaust channel is indicated by a dashed arrow in FIG. 5. Once a battery accommodated in the battery accommodating space 6 generates gas, the gas is discharged from a battery pack through the third exhaust hole 202, the first exhaust cavity 207, the second exhaust cavity 402, and an exhaust channel 501, thereby improving safety of the battery pack. A communication manner between the second tray cross beam 3 and the tray longitudinal side beam 4 is similar to the communication manner between the first tray cross beam 2 and the tray longitudinal side beam 4. Therefore, details are not described again.

It will be understood from FIG. 2 and FIG. 4, the first exhaust cavity 207 includes a first cavity 203, a second cavity 204, and a third cavity 205. The first cavity 203 communicates with the third cavity 205 through the second cavity 204. A width of the second cavity 204 is less than a width of the first cavity 203, and the width of the second cavity 204 is also less than a width of the third cavity 205. The first cavity 203 communicates with the battery accommodating space 6 through the third exhaust hole 202 or another suitable structure. An advantage of this configuration is that gas in the battery accommodating space 6 first enters the first cavity 203 and is then blocked at the second cavity 204. If pressure of the gas entering the first cavity 203 from a specific third exhaust hole 202 is high, pressure distribution is first performed on the gas in the first cavity 203, and then the gas enters the third cavity 205 through the second cavity 204, thereby preventing the third cavity 205 from exerting further compression on a battery in the battery accommodating space 6 due to locally excessive air pressure. It will be understood from FIG. 3, configurations of a first cavity 303, a second cavity 304, and a third cavity 305 of the second tray cross beam 3 are similar to those of the first tray cross beam 2. Therefore, details are not described again. The second tray cross beam 3 is provided with a third exhaust hole 302.

It will be understood from FIG. 2, FIG. 3, and FIG. 5, a difference between the first tray cross beam 2 and the second tray cross beam 3 lies in that the first cavity 203 of the first tray cross beam 2 is shortened toward two ends of the first bayonet 201, and the first cavity 303 of the second tray cross beam 3 is shortened toward the first bayonet 301 from both ends of the first cavity 303. Therefore, after the first tray cross beam 2, the second tray cross beam 3 are connected to the tray longitudinal beam 1, a first interval space 206 is provided between the first cavity 203 of the first tray cross beam 2 and the tray longitudinal beam 1, and a second interval space 306 is provided between the first cavity 303 of the second tray cross beam 3 and the tray longitudinal side beam 4. In order to prevent gas leakage within the battery tray 100, the first cavity 203 of the first tray cross beam 2 is closed at the first interval space 206, and the first cavity 303 of the second tray cross beam 3 is closed at the second interval space 306 by a plug. Alternatively, the first cavity 203 of the first tray cross beam 2 may be of an open air-intake structure at the first interval space 206, and similarly, the first cavity 303 of the second tray cross beam 3 may also be of an open-air intake structure at the second interval space 306, to allow gas from the battery accommodating space 6 to enter. In other words, the first interval space 206 and the second interval space 306 are arranged diagonally for each battery accommodating space 6. The first interval space 206 and the second interval space 306 may be used for wiring between batteries in each battery accommodating space 6. For the tray longitudinal side beam 4, an exhaust cross section at a connection position between the first tray cross beam 2 and the tray longitudinal side beam 4 is different from an exhaust cross section at a connection position between the second tray cross beam 3 and the tray longitudinal side beam 4, which facilitates formation of a pressure difference in the second exhaust cavity 401, so that high-pressure gas can be more easily discharged to an external environment of the battery pack.

More specifically, it will be understood from FIG. 2 to FIG. 5, the first cavity 203 of the first tray cross beam 2 extends to the tray longitudinal side beam 4, and the first cavity 303 of the second tray cross beam 3 extends to the tray longitudinal beam 1. This structure facilitates formation of the pressure difference described above, and further ensures overall structural strength of the battery tray 100 as much as possible.

Optionally, the first tray cross beam 2 and the second tray cross beam 3 are integrally formed by extrusion, which is simple in production and facilitates formation of each cavity described above. During actual production, the first tray cross beam 2 and the second tray cross beam 3 may alternatively be formed by bending and welding a plate member.

Optionally, referring to FIG. 5, the tray longitudinal side beam 4 has a first exhaust hole 401. The battery accommodating space 6 inside the battery tray 100 communicates with the second exhaust cavity 402 through the first exhaust hole 401. In this way, a part of gas can directly enter the second exhaust cavity 402, and then be discharged to the exterior of the battery pack.

Optionally, it will be understood from FIG. 2, FIG. 3, and FIG. 5, a distance between the first exhaust hole 401 and a position at which the first exhaust cavity 207 communicates with the second exhaust cavity 402 is less than a first threshold. The first threshold may be a suitable value such as 2 cm, 5 cm, or the like. In other words, the first exhaust hole 401 is closer to a position at which the first tray cross beam 2 (or the second tray cross beam 3) is connected to the tray longitudinal side beam 4, relative to both ends of the tray longitudinal side beam 4. This facilitates gas concentration and convergence, prevents excessive air leakage points from being generated on the tray longitudinal side beam 4, and prevents structural strength of the tray longitudinal side beam 4 from being reduced, which results in poor exhaust performance due to compression of the second exhaust cavity 402. This is because the position at which the first tray cross beam 2 (or the second tray cross beam 3) is connected to the tray longitudinal side beam 4 has higher structural strength.

Under the first bayonet 201 of the second tray cross beam 2, the first exhaust cavity 207 is in communication. In this case, high-pressure gas generated by the battery in the battery accommodating space 6 on either side of the tray longitudinal beam 1 can be discharged from both directions as indicated by the dashed arrow in FIG. 5, to improve exhaust efficiency.

Optionally, the first tray cross beam 2 is connected to the tray longitudinal beam 1 by welding at an engagement position between the first bayonet 201 and the second bayonet 101, so as to improve connection strength. A manner of welding the second tray cross beam 3 to the tray longitudinal beam 1 is similar to a manner of welding the first tray cross beam 2 to the tray longitudinal beam 1. Therefore, details are not described herein again.

It will be understood from FIG. 5 that the battery tray 100 further includes the tray cross side beam 5. The tray cross side beam 5 is provided with the exhaust channel 501, and the second exhaust cavity 402 communicates with the space outside the battery tray 100 through the exhaust channel 501. A separate explosion-proof valve may be disposed in the exhaust channel 501, or an explosion-proof valve may be formed by locally thinning the tray cross side beam 5. In a gas flow path indicated by the dashed arrow in FIG. 5, gas generated by the battery in the battery accommodating space 6 enters the first cavity 203, the second cavity 204, and the third cavity 205 of the first exhaust cavity 207 through the third exhaust hole 202, enters the second exhaust cavity 402, and then is discharged to an outer space of the battery tray 100 through the exhaust channel 501, thereby ensuring normal air pressure in the battery pack.

The tray cross side beam 5 is further provided with a second exhaust hole 502, and the exhaust channel 501 communicates with the battery accommodating space 6 of the battery tray 100 through the second exhaust hole 502. In this way, a part of gas generated by a battery closest to the tray cross side beam 5 can be discharged directly to the outer space of the battery tray 100.

In another aspect, an embodiment of this application provides a battery pack, including a battery and the battery tray 100 as described above. The battery is accommodated in a battery accommodating space 6 of the battery tray 100.

In yet another aspect, an embodiment of this application provides a vehicle, and the vehicle is installed with the foregoing battery pack or battery tray.

In this application, the battery pack and vehicle have good structural strength and safety.

In the foregoing embodiments, differences between embodiments are mainly described. Different optimization features between embodiments may be combined to form a better embodiment when there is no contradiction. In consideration of brevity, details are not described herein again.

Although some specific embodiments of this application have been described in detail by using examples, a person skilled in the art would understand that the foregoing examples are merely for description, but are not intended to limit the scope of this application. A person skilled in the art would understand that modifications may be made to the foregoing embodiments without departing from the scope and spirit of this application. The scope of this application is defined by the appended claims.

## Claims

1. A battery tray, comprising:
a frame, the frame defining a space inside the battery tray; and
a tray cross beam and a tray longitudinal beam (1) arranged inside the battery tray; wherein
the tray cross beam is provided with a first bayonet, the tray longitudinal beam (1) is provided with a second bayonet (101), and the first bayonet of the tray cross beam is engaged with the second bayonet (101) of the tray longitudinal beam (1), to divide the space inside the battery tray into a plurality of battery accommodating spaces (6).

2. The battery tray according to claim 1, wherein the frame comprises a tray longitudinal side beam (4), the tray cross beam is provided with a first exhaust cavity, the tray longitudinal side beam (4) is provided with a second exhaust cavity (402), the first exhaust cavity communicates with the second exhaust cavity (402), the battery accommodating space (6) inside the battery tray communicates with the first exhaust cavity, and the second exhaust cavity (402) communicates with a space outside the battery tray.

3. The battery tray according to claim 2, wherein the first exhaust cavity comprises a first cavity, a second cavity, and a third cavity, the first cavity communicates with the third cavity through the second cavity, a width of the second cavity is less than a width of the first cavity, the width of the second cavity is also less than a width of the third cavity, and the first cavity communicates with the battery accommodating space (6).

4. The battery tray according to claim 3, wherein the tray cross beam comprises a first tray cross beam (2) and a second tray cross beam (3), a first interval space (206) is provided between a first cavity of the first tray cross beam (2) and the tray longitudinal beam (1), and a second interval space (306) is provided between a first cavity of the second tray cross beam (3) and the tray longitudinal side beam (4).

5. The battery tray according to claim 4, wherein the first cavity of the first tray cross beam (2) extends to the tray longitudinal side beam (4) and the first cavity of the second tray cross beam (3) extends to the tray longitudinal beam (1).

6. The battery tray according to any one of claims 2 to 5, wherein the tray longitudinal side beam (4) has a first exhaust hole (401), and the battery accommodating space (6) inside the battery tray communicates with the second exhaust cavity (402) through the first exhaust hole (401).

7. The battery tray according to claim 6, wherein a distance between the first exhaust hole (401) and a position at which the first exhaust cavity communicates with the second exhaust cavity (402) is less than a first threshold.

8. The battery tray according to any one of claims 2 to 7, wherein the first exhaust cavity is in communication below the first bayonet.

9. The battery tray according to any one of claims 1 to 8, wherein the tray cross beam is connected to the tray longitudinal beam (1) by welding at an engagement position between the first bayonet and the second bayonet (101).

10. The battery tray according to any one of claims 2 to 8, wherein the frame further comprises a tray cross side beam (5), the tray cross side beam (5) is provided with an exhaust channel (501), and the second exhaust cavity (402) communicates with the space outside the battery tray through the exhaust channel (501).

11. The battery tray according to claim 10, wherein the tray cross side beam (5) is further provided with a second exhaust hole (502), and the exhaust channel (501) communicates with the battery accommodating space (6) of the battery tray through the second exhaust hole (502).

12. A battery pack, comprising:
the battery tray according to any one of claims 1 to 11; and
a battery, the battery being accommodated in a battery accommodating space (6) of the battery tray.

13. A vehicle, wherein the vehicle is installed with the battery tray according to any one of claims 1 to 11, or with the battery pack according to claim 12.
